**Europäisches Patentamt**

**European Patent Office**

**Office européen des brevets**

(11) Numéro de publication : **0 610 122 A1**

(12)

# DEMANDE DE BREVET EUROPEEN

(21) Numéro de dépôt : **94400198.1**

(22) Date de dépôt : **31.01.94**

(51) Int. Cl.⁵ : **C08J 7/04,** C09D 175/04,
// (C09D175/04, 177:00)

(30) Priorité : **05.02.93 FR 9301316**

(43) Date de publication de la demande :
**10.08.94 Bulletin 94/32**

(84) Etats contractants désignés :
**AT BE CH DE DK ES FR GB GR IE IT LI LU NL PT SE**

(71) Demandeur : **ELF ATOCHEM S.A.**
**4 & 8, Cours Michelet**
**La Défense 10**
**F-92800 Puteaux (FR)**

(72) Inventeur : **D'Herbecourt, Bruno**
**12 rue Ile de France**
**F-27300 Bernay (FR)**
Inventeur : **Moulin, Thierry**
**30 Chemin de Montray**
**F-69110 Saint-Foy les Lyons (FR)**

(54) **Peintures à base de poudres de polyamide destinées au revêtement de profilés PVC.**

(57)    L'invention concerne une composition de revêtement pour des profilés en PVC à base d'un liant, d'un agent de réticulation et d'une poudre thermoplastique.
    Elle est particulièrement utile pour revêtir les profilés en PVC pour les fenêtres, les volets et les portes.
    Les menuiseries en PVC ainsi revêtues ont une exceptionnelle résistance aux chocs, à l'abrasion, aux frottements et aux intempéries.

EP 0 610 122 A1

Les peintures à base de polyamide ont un domaine d'utilisation particulièrement étendu, comprenant les revêtements : sur bois (ameublement, mobilier de bureau), sur aluminium (industrie du prélaquage, revêtements de volets roulants) sur supports plastiques (matériel informatique, audio, vidéo), et les revêtements de sols (parking, terrains de sports).

Certains brevets spécifiques à ces applications ont été déposés nous citerons le brevet EP-0047508 concernant des applications du type prélaquage. Ce brevet décrit une composition de revêtement pour revêtir des objets métalliques faisant appel au procédé de laquage en bande (coil coating). La composition du revêtement est caractérisée en ce qu'elle contient un liant à fonction hydroxyle, un polyisocyanate bloqué et une poudre de polyamide. Le revêtement est ensuite réticulé à des températures comprises entre 200 et 260° C en 25 à 50s, trop élevées pour être utilisées sur un profilé PVC rigide dont le seuil de déformation se situe entre 60° C et 80° C.

La demande japonaise 54.64945, publiée à 18 mois sous le n° JP 55157661 le 9 décembre 80, décrit une peinture à base de polyamide 6 ou 6.6 ou 6.10 d'huile de silicone et d'un prépolymère uréthanne particulier applicable sur glissières PVC destinées à l'industrie automobile. Ce revêtement est utilisé de façon à obtenir des caractéristiques très spécifiques liées au coefficient de friction.

Le brevet français FR 1.469.096 revendique un système polyuréthanne/polyamide à séchage à l'air destiné au revêtement de sol; le but recherché est l'effet antidérapant.

L'invention, objet de la présente, concerne un revêtement sous forme de film coloré ou transparent, d'aspect lisse ou structuré, son procédé de préparation, son application sur support PVC, en particulier sur des pièces destinées à la menuiserie PVC et ses accessoires (appuis de fenêtre, volets roulants, coffres de volets roulants...).

L'invention concerne aussi les profilés ainsi que la menuiserie en PVC et ses accessoires ainsi revêtus. Ces profilés et accessoires peuvent être obtenus par extrusion ou moulage.

L'un des inconvénients de la fenêtre en PVC est sa couleur blanche.

Produire des menuiseries PVC en couleur suppose de résoudre des problèmes techniques complexes notamment liés à la tenue aux chocs, à la constance des qualités esthétiques et à la durabilité, dans une large palette de couleurs, dans des conditions économiques acceptables.

On connaît, actuellement, quatre techniques permettant de donner la couleur aux profilés:
- la teinte dans la masse
- la coextrusion
- le plaxage
- la peinture

La teinte dans la masse est rendue difficile en raison d'incompatibilités entre certains composants des polymères et les pigments entraînant un mauvais comportement aux ultra-violets du matériau.

La coextrusion consiste à extruder ensemble le PVC de la structure, blanc, et le polyméthacrylate de méthyle (PMMA) coloré sur les parties externes du profilé. Si la technique est parfaitement maîtrisé et fiable, il se dresse un certain nombre d'obstacles, essentiellement d'ordre économique. Les coûts de production et de stockage sont très élevés.

Le plaxage est actuellement la technique la plus utilisée. Elle consiste à coller à chaud un film polymère sur les profilés à la sortie de l'extrudeuse. On obtient ainsi des profilés de couleur de bonne qualité, déjà utilisés depuis plusieurs années sans avaries notoires.

Cette technique a toutefois deux inconvénients : une tenue aux chocs souvent discutable, eu égard aux conditions de chantier souvent difficiles et surtout des frais de stockage élevés. Il faut, en effet, stocker et répertorier de nombreuses références dans plusieurs coloris. D'autre part, la palette de couleurs est souvent limitée, essentiellement due aux contraintes de stockage.

On a découvert un revêtement constitué d'une ou plusieurs couches de peinture composée d'une dispersion de résines thermoplastiques colorées ou non dans la masse dans un vernis liquide pigmenté ou non comprenant un (ou des) liant et un agent de réticulation soluble dans des solvants organiques. Cette peinture est ensuite déposée sur les menuiseries en PVC puis réticulée le plus souvent vers 50°C dans un four à infra rouge.

Ces peintures à base de polyamide, permettent de résoudre un certain nombre de contraintes, en particulier, liées à l'esthétique, au comportement aux ultra-violets et à la résistance aux chocs. Les grandes souplesses d'application permettent d'éliminer l'inconvénient du stockage.

La présente invention est une composition de revêtement pour des profilés en PVC comprenant:
a) un liant,
b) un agent de réticulation,
c) une résine thermoplastique finement divisée en suspension, éventuellement des pigments, colorants et charges,

d) un solvant,

le liant étant tel qu'il laisse exsuder les additifs et plastifiants du PVC à travers le film de peinture, qu'on obtient en réticulant ladite composition, tout en formant un film adhérant au PVC.

La (ou les) couche du revêtement selon l'invention comprend une résine thermoplastique solide en poudre ayant une taille des particules jusqu'à 200 μm et de préférence entre 0,5 et 60 μm. La résine thermoplastique peut représenter de 0,5 à 80 % en poids et, de préférence, de 0,5 à 40 % en poids par rapport au revêtement sec. Le liant est, de préférence, un polymère soluble dans le solvant.

L'agent de réticulation est aussi de préférence soluble dans le solvant.

Le liant une fois réticulé doit être résistant aux intempéries, durable dans le temps et aussi aux agents de nettoyage. Il doit aussi être adhérant au PVC.

Il est préférable qu'il forme un réseau à mailles suffisamment larges pour laisser exsuder les additifs et plastifiants du PVC.

Le liant contenant ou non des groupes hydroxyles et/ou carboxyliques peut être par exemple du type polyacrylate, epoxy, polyéther, polyester, caprolactone ou vinylique.

Selon une forme avantageuse de l'invention, le liant est un mélange de deux résines A1 et A2.

A1 est une résine contenant des groupes hydroxyles et/ou carboxyliques, par exemple, du type polyacrylate, epoxy, polyéther, polyester ou caprolactone.

A2 est une résine vinylique chlorée contenant des groupes hydroxyles et/ou carboxyliques.

Les résines A1 et A2 ont de préférence une masse moléculaire moyenne en nombre de 350 à 35 000 et une fonctionnalité hydroxyle et/ou carboxylique en pourcent en poids de 0,5 à 6 et, de préférence, de 0,8 à 4.

Le liant peut constituer de 20 à 99,5 % en poids du revêtement sec.

Selon une forme préférée de l'invention, la résine A1 est une résine polyester hydroxylée et la résine A2 est un copolymère acétochlorure de vinyle hydroxylé.

La résine polyester hydroxylée faiblement ramifiée apporte les propriétés principales du film (résistance aux intempéries, résistance chimique, durabilité dans le temps) le fait qu'elle soit faiblement ramifiée permet, après réticulation avec le durcisseur, d'obtenir un réseau de polymère tridimensionnel à mailles relativement larges, qui permet au plastifiant contenu dans le PVC, qui exude hors de la matière dans le temps, de traverser le film de revêtement sans le faire décoller. Un réseau polymérique à mailles plus serrées ne permettrait pas au plastifiant de migrer à travers le film de peinture, et on obtiendrait un décollement du revêtement dans le temps.

La résine copolymère acétochlorure de vinyle hydroxylée qui est relativement polaire et chlorée (comme le PVC) apporte l'adhérence sur le support PVC ; le fait qu'elle soit hydroxylée permet de la réticuler également avec le durcisseur isocyanate et de ne pas diminuer la résistance du film aux agressions.

Comme agent de réticulation, on utilise, de préférence, des composés isocyanates aromatiques, aliphatiques ou cycloaliphatiques et, de préférence, les diisocyanates et triisocyanates. Dans ce cas, le couple polymère à fonction hydroxyle (et/ou) carboxylique / isocyanate est dénommé polyuréthanne.

On utilise aussi, comme agent de réticulation, un composé polyisocyanate non bloqué. On ne sortirait pas du cadre de l'invention en utilisant un polyisocyanate bloqué pourvu qu'il puisse être débloqué à des températures compatibles avec le PVC.

A titre d'exemple de diisocyanate, on peut citer l'examéthylène diisocyanate-1,6 (HDT), le 4,4'-diphénylméthane-iisocyanate (HMDI) et le 3-isocyanato méthyl-3, 5, 5-triméthylcyclohexyl isocyanate (IPDI) particulièrement préféré par la demanderesse.

On peut, également, utiliser dans le cas d'un polymère acrylique carboxylé, des acrylates époxydes comme agent de réticulation.

L'agent de réticulation est ajouté, de préférence, en quantité telle que le rapport molaire des groupes réactifs de l'agent de réticulation à ceux du (ou des) polymère contenant des groupes hydroxyles (et/ou) carboxyliques soit dans la gamme de 0,6 à 1,5 de préférence de 0,7 à 1,3.

Par résines thermoplastiques, on entend les polymères thermoplastiques ayant un point de ramollissement compris entre 100° C et 230° C et, de préférence, les polyamides. Comme polyamides appropriés, on peut mentionner les polymères constitués d'un ou plusieurs acide ω-aminomonocarboxyliques ayant 6 à 12 atomes de carbone par molécule ou les lactames correspondants, par exemple : le polycaprolactame (PA-6), le polymère de l'acide ω-amino-undécanoïque (PA-11) et le polylauryllactame (PA-12) ou les copolymères, par exemple, du caprolactame et de l'acide ω-amino-undécanoïque (PA-6/11), du caprolactame et du lauryllactame (PA 6/12) et du caprolactame, de l'acide ω-amino-undécanoïque et du lauryllactame (PA 6/11/12).

Les polyamides appropriés sont également les produits de polycondensation d'une diamine, par exemple : l'hexaméthylènediamine, et d'un acide dicarboxylique, par exemple : l'acide adipique, l'acide sébacique, l'acide dodécanedicarboxylique et l'acide téréphtalique. Des exemples représentatifs de ces polyamides comprennent le poly(hexaméthylène-adipamide) (PA-6-6), le poly (hexaméthylène-sébacamide) (PA-6.10), et le poly(hexaméthylène-dodécané-dicarboxamide) (PA-6.12). Eventuellement, on peut utiliser des mélanges de polyamides, sous réserve que leur point de ramollissement soit dans la gamme de 110-230° C. On préfère utiliser le PA-11, PA-12, le PA-6/12 et/ou le PA-12.12, seuls ou en mélange.

Par résines thermoplastiques, on entend également les polyétheramides et, parmi eux, les polyétherestéramides, notamment ceux décrits dans les brevets FR 2273021 et FR 2401947.

Les poudres peuvent être obtenues par broyage de polymères ou par polymérisation directe à la granulométrie souhaitée, telle que décrite notamment dans le brevet EP 192515.

Selon l'invention, le point de ramolissement des résines thermoplastiques est dans la gamme de 110° C à 230° C, de préférence de 120° C à 210° C. Le point de ramollissement est généralement déterminé à l'aide d'un banc de Koefler.

Comme solvants solubilisant le liant constitué du (ou des) polymère hydroxylé et/ou carboxylé et l'agent de réticulation, on peut utiliser des solvants organiques ayant un point d'ébullition compris entre 40° C et 310° C et, de préférence, entre 77° C et 193° C. Ces solvants ne doivent pas fragiliser le PVC.

Des exemples représentatifs des solvants comprennent les hydrocarbures aromatiques du type xylène et toluène, les esters aliphaliques du type acétate d'éthyle, acétate de butyle, acétate d'éthylène glycol - l'éthoxypropionate d'éthyle- les cétones telles que méthyl-éthyl-cétone, méthyl-isobutyl-cétone-diacétone al-cool- les alcools aliphatiques tels que, butanol, isopropanol, méthanol, éthanol - 2-méthoxy propanol (commercialisé sous le nom de Dowanol PM par la société DOW CHEMICAL) - les hydrocarbures aliphaliques ayant un point d'ébullition compris entre 30 et 160° C (commercialisés par exemple sous les marques HYDROSOL Essence A, B, C, D, E, F, G ou H par les Sociétés TOTAL ou SHELL Chimie. Le (ou les) solvant constitue de 10 à 70 % en poids du total de la composition et, de préférence, de 30 à 50 % en poids.

La composition du revêtement peut éventuellement contenir un ou plusieurs adjuvants et additifs habituels, par exemple : des agents de dispersion, des agents anticoulures modifiant les propriétés rhéologiques, des agents antimousse, des stabilisants vis-à-vis des UV, des agents d'écoulement, des plastifiants, des agents modifiant le brillant et des promoteurs de durcissement tels que l'acide paratoluènesulfonique, les sels de métaux lourds et les amines.

Les pigments appropriés à la pigmentation de la peinture et de la résine thermoplastique appartiennent aux types habituels, c'est-à-dire les pigments acides, neutres ou basiques qui peuvent être de nature organique ou minérale. Si on le désire, les pigments peuvent être préalablement traités pour modifier leurs propriétés. Comme exemple de pigments appropriés, on peut mentionner le dioxyde de titane, l'oxyde rouge de fer, l'orange de molybdate, le chromate de plomb, le noir de carbone et les pigments de phtalocyanine. On entend ici également par pigments, les pigments métalliques tels que l'aluminium et l'acier inoxydable. Le taux du (ou des) pigment à la totalité du revêtement sec peut atteindre 60 %.

La composition du revêtement ne contient essentiellement aucun produit du type huile de silicone. Ce dernier produit, rend le revêtement très glissant et ne permet pas de faire des raccords de peinture, il n'y a aucune adhérence du raccord.

Les différentes couches du revêtement selon l'invention peuvent être appliquées selon diverses techniques d'application liquide, mais de préférence par projection au pistolet pneumatique à air mixe ou sans air (airless) ou par procédé électrostatique de type pistolet pneumatique, mini bol ou disque haute vitesse.

Avant enduction, le substrat peut subir un ou plusieurs traitements de surface afin d'améliorer l'adhérence du revêtement. A titre d'exemple, on peut **citer** le dégraissage de la surface du substrat, des traitements de type oxydant tels que flammage, décharge coronna, action d'un plasma.

Après enduction du substrat à l'aide du ou des revêtements, on procède à la cuisson du revêtement pendant 2 heures à 24 heures, en général, dans un four porté à une température comprise entre 20° C et 80° C et, de préférence, entre 40 C et 60° C ou de 5 mn à 30' sous cuisson infra rouge à une température comprise entre 50 et 100° C en surface.

Les matériaux composites obtenus à l'aide du revêtement selon l'invention sont constitués :
- d'un (ou des) revêtement d'épaisseur pouvant être comprise entre 10 et 100 μm et, de préférence, entre 10 et 40μm.
- d'un substrat, de préférence, en PVC d'épaisseur variable sous forme de profilé.

Les avantages des profilés et des menuiseries en PVC revêtus selon l'invention sont:
- grande résistance aux intempéries (UV, humidité, etc...),
- grande résistance au choc même à froid (pas d'écaillage),
- grande résistance à la rayure,
- résistance au test ERICHSEN modèle 435: supérieur à 15N.
- On peut cintrer les profilés peints ou provoquer d'autres déformations, la peinture n'est pas altérée.

De plus, il a été observé les trois propriétés suivantes :
- résistance à l'usure aux joints de fenêtres (frottement lors des ouvertures et fermetures).

- conservation de la résilience en traction du PVC non peint (et peut même améliorer cette résilience en traction après vieillissement car le revêtement protège le PVC et évite les craquelures en surface).
- permet de conserver la soudabilité du PVC (on peut peindre les profilés et les alentours de la soudure et la résistance mécaniques de la soudure est aussi bonne qu'avec le PVC non peint).

On peut peindre les profilés, les couper, les assembler pour obtenir les menuiseries. La peinture n'est pas attérée par les soudures.

La demanderesse a découvert que les menuiseries en PVC ainsi revêtues sont très résistantes à l'abrasion provoquée par un vent de sable et à l'abrasion des feutres d'étanchéité qui peuvent se trouver, par exemple, sur le cadre contre lequel vient s'appuyer la partie mobile d'une fenêtre ou d'une porte.

Le test du vent de sable est le suivant :

pendant 15 secondes à une distance constante de 6 cm avec des billes de verre (dimensions : entre 53 jusqu'à 105 microns).avec une pression d'air de 80 psi et un débit de 40 à 60 CFM.

Polyuréthane normal : après 6-8 secondes la peinture se détache.

Après 15 secondes, tout polyuréthane est disparu.

Polyuréthane chargé de polyamide :

on remarque une certaine perte de brillance et un changement de couleur.

Test de résistance au frottement d'une brosse d'étanchéité :

20 000 coups d'un ouvrant coulissant : le produit commence à briller un peu, mais reste intacte après 10 000 coups.

On a trouvé aussi que ce revêtement des menuiseries PVC résistait très bien au choc ainsi qu'aux détergents et produits de nettoyage des vitres.

Cette peinture suit les dilatations provoquées par la chaleur ainsi que les déformations des menuiseries sans aucune altération, ni craquelure.

Les exemples suivants illustrent l'invention sans toutefois la limiter.

LES QUANTITES INDIQUEES, SAUF MENTION CONTRAIRE, SONT EXPRIMEES EN POIDS.

### *Exemple 1*

### A) **PREPARATION DU REVETEMENT**

On prépare une pâte de broyage en mélangeant une partie des constituants du revêtement en dispersion dans un ou plusieurs solvants.

On opère dans un disperseur à billes.

Une fois la dispersion effectuée, on ajoute le complément du revêtement et on mélange intimement les constituants, puis on effectue la mise à viscosité du revêtement.

B) **CONSTITUANT DU REVETEMENT**          **Quantité en Poids (g)**

Broyage

## Résine Polyester hydroxylé faiblement ramifiée

- Teneur en hydroxyle :                    4,3 %
- Poids équivalent :                       395
- Densité à 20° C :                        1,17
- Viscosité à 23° C :                      2 200 mPas.S.

diluée à 60 % en poids dans l'acétate de butyle.

Cette solution est appelée Résine A                    *21,00*

## Résine du type copolymère d'acétochlorure de vinyle hydroxylée

- Teneur en hydroxyle :                    2,3 %
- Densité :                                1,39
- Masse moléculaire en nombre :            27 000
- Température de transition vitreuse :     79° C
- Viscosité inhérente :                    0,53

En solution à 20 % en poids,
dans les solvants suivants :

- Copolymère d'acétochlorure
  de vinyle hydroxylée :        20          *26,70*
- Acétate de butyle :           31
- Acétate de méthoxylpropyle :  16
- Méthyléthylcétone :           33
                                ___
                                100

Cette solution est appelée Résine B.

Additifs de broyage :

- Agent mouillant :    0,15
- Agent thixotropant :    0,30

Pigments de broyage :

- Bleu de phtalocyanine    0,55
- Dioxyde de titane rutile    0,80
- Noir de carbone    0,40
- Jaune de chrome    10,30

Complément :

- Résine A :    10,45
- Résine B :    13,35
- Agent de tension :    0,35
- Sel de zinc à 10 % en poids
  dans l'acétate de méthyle :    1,70
- Dibutylaurate d'étain à 5 %
  en poids dans xylène :    0,40
- Résine thermoplastique polyamide 11
  de granulométrie comprise entre 20 et 60 µm    4,65

Mise à viscosité :

- Xylène    2,00
- Acétate de butyle    6,90

              ———
              100,00

A 100 parties en poids de cette composition, on ajoute 15 parties en poids d'un durcisseur polyisocyanate au moment de l'emploi (caractéristiques du polyisocyanate: polyisocyanate aliphatique du type "biuret" à base d'hexaméthylène diisocyanate (HMDI), extrait-sec: 75 %, teneur en NCO : 16,4 %, viscosité à 23° C : 250 mPa.s.).

C) **MISE EN OEUVRE**

Après dégraissage du substrat PVC avec un mélange de solvants appropriés, la (ou les) couche du revêtement est (sont) appliquée au pistolet pneumatique, puis est (sont) réticulée pendant 12 h à 50° C. on refroidit le substrat ainsi revêtu à l'air ambiant.
On obtient un matériau composite constitué :
- d'un profilé PVC.

- d'une couche superficielle d'épaisseur égale environ à 25 à 40 μm.

Essai 1 :

- Abrasimètre TABER (NFT 30015): Meule CS17 1000 cycles
    ● Charge: 500 g ● Perte de poids : 110 mg
- Adhérence : NFT 30038 - Cote 0
- QUV (NFT 30036):
    ● Après 1 600 H de QUV, nous avons une dégradation par rapport à l'échelle des gris de 4-5.
    ● L'adhérence est bonne: Cote 0
- Choc (NFP 24500):
    ● A froid (- 10° C)
    ● Pas de casse sous un choc de 1 kg tombant de 1 m (soit sous une énergie de 2 joules à - 10° C).

**Revendications**

**1)** Composition de revêtement pour des profilés en PVC comprenant:
a) un liant,
b) un agent de réticulation,
c) une résine thermoplastique finement divisée en suspension, éventuellement des pigments, colorants et charges,
d) un solvant ;
le liant étant tel qu'il laisse exsuder les additifs et plastifiants du PVC à travers le film de peinture qu'on obtient en réticulant ladite composition tout en formant un film adhérant au profilé PVC.

**2)** Composition selon la revendication 1 caractérisée en ce que le liant contenant ou non des groupes hydroxyles et/ou carboxyliques est du type polyacrylate, epoxy, polyéther, polyester, caprolactone ou vinylique.

**3)** Composition selon la revendication 1 ou 2 caractérisée en ce que le liant est un mélange de deux résines A1 et A2 :

A1 est une résine faiblement ramifiée contenant des groupes hydroxyles et/ou carboxyliques.

A2 est une résine vinylique chlorée contenant des groupes hydroxyles et/ou carboxyliques.

**4)** Composition, selon la revendication 3 caractérisée en ce que la résine A1 est une résine polyester hydroxylée et la résine A2 est un copolymère d'acétochlorure de vinyle hydroxylé.

**5)** Composition selon l'une des revendications 1 à 4 caractérisée en ce que l'agent de réticulation est un composé polyisocyanate non bloqué.

**6)** Composition selon l'une des revendications 1 à 5 caractérisée en ce que la résine thermoplastique finement divisée est une poudre de polyamide.

**7)** Application des compositions selon l'une des revendications 1 à 6 sur des profilés en PVC ou des menuiseries et ses accessoires en PVC.

**8)** Profilés ou menuiseries et ses accessoires en PVC revêtus avec la composition des revendications 1 à 7.

EP 0 610 122 A1

**Office européen des brevets**

**RAPPORT DE RECHERCHE EUROPEENNE**

Numero de la demande

EP 94 40 0198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| D,X | DATABASE WPI Week 8107, Derwent Publications Ltd., London, GB; AN 81-10589D & JP-A-55 157 661 (TOYODA GOSEI) 9 Décembre 1980 * abrégé * | 1,2,5-8 | C08J7/04 C09D175/04 //(C09D175/04, 177:00) |
| D,A | EP-A-0 047 508 (REICHOLD CHEMIE A.G.) * revendications 1,2,4 * * page 3, ligne 26 - ligne 37 * | 1 | |
| A | EP-A-0 469 961 (ATOCHEM) * revendications 1,3-5 * * page 2, ligne 15 - ligne 48 * * page 3, ligne 50 - ligne 57 * | 1 | |
| D,A | FR-A-1 469 096 (C. SCHWARTZ) * page 1, colonne de gauche, alinéa 1 * * page 1, colonne de gauche, alinéa 5 * * page 1, colonne de droite, alinéa 4; exemple 1 * | 1 | |

**DOMAINES TECHNIQUES RECHERCHES (Int.Cl.5)**

C08J
C09D
C08G

Le présent rapport a été établi pour toutes les revendications

| Lieu de la recherche | Date d'achèvement de la recherche | Examinateur |
|---|---|---|
| LA HAYE | 19 Mai 1994 | Van Puymbroeck, M |

9